# EUROPEAN PATENT APPLICATION

(11) **EP 2 688 175 A1**
(43) Date of publication of application: **22.01.2014**
(21) Application number: 11860895.9
(22) Date of filing: 07.12.2011
(51) Int. Cl.: H02J 7/00, H01M 10/42, H02J 7/02

(54) **COMMUNICATION SYSTEM, AND RECHARGEABLE BATTERY SYSTEM**

(30) Priority: 14.03.2011 JP 2011055697
(71) Applicant: Sanyo Electric Co., Ltd., Osaka 570-8677 (JP)
(72) Inventor: ABE Takayoshi, Moriguchi City Osaka 570-8677 (JP); ASARI keisuke, Moriguchi City Osaka 570-8677 (JP); MATSUMURA kohji, Moriguchi City Osaka 570-8677 (JP)
(74) Representative: Glawe, Delfs, Moll
(86) International application number: PCT/JP2011/078260
(87) International publication number: WO 2012/124221

(57) **Abstract**

A communication system provided with a battery assembly obtained by connecting in series a plurality of battery packs having at least one rechargeable battery cell; a battery management unit for managing the battery packs; and an optical line used for transmitting from the battery packs to the battery management unit, along with battery data, an emergency stop signal for cutting off the connection between the battery assembly and a power conversion system when unsafe conditions are detected by the battery packs.

## Description

### FIELD OF THE INVENTION

The present invention relates to a communication system and rechargeable battery system.

### BACKGROUND OF THE INVENTION

Communication systems provided with a plurality of battery packs containing rechargeable battery cells have existed in the past. One such communication system has been disclosed in Patent Document 1.

In the communication system disclosed in Patent Document 1, battery packs having a battery module, which comprises a plurality of rechargeable battery cells, and a cell controller are connected in series. The cell controller sends detected battery status information to a battery controller via an insulated communication line.

### Cited Documents

### Patent Documents

Patent Document 1: Laid-Open Patent Publication No. 2008-235032 (FIG. 3, etc.)

### SUMMARY OF THE INVENTION

### Problem Solved by the Invention

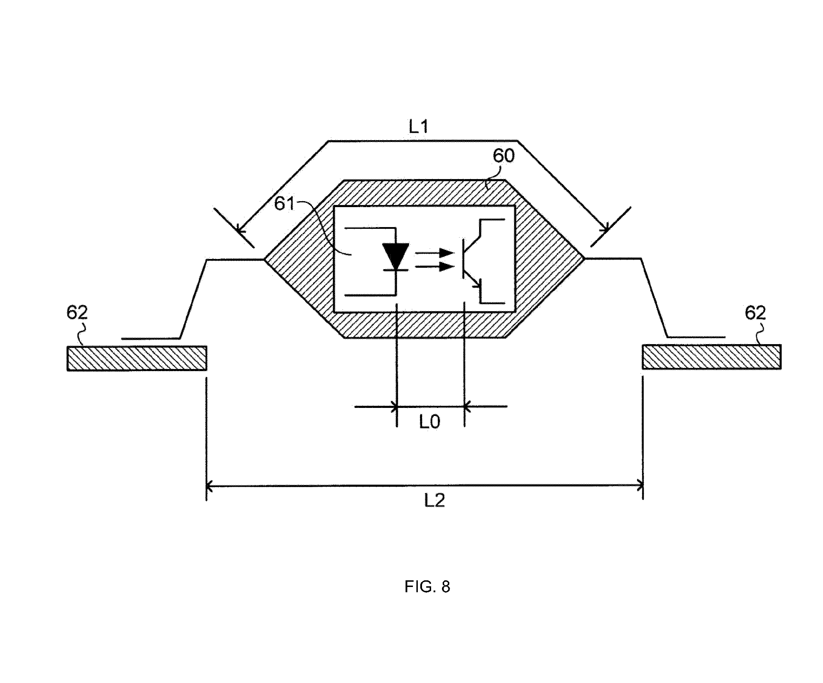

In Patent Document 1, a photocoupler is used in the insulated communication line. The insulation provided by the photocoupler is required by safety standards in many different countries both at home and abroad, and these standards establish a minimum value for the insulation distance, creepage distance and spatial distance in order to protect the user from dangerously high voltage. The insulating distance is the shortest distance between the light-emitting side and the light-receiving side as insulated by a resin (L0 in FIG. 8). The creepage distance is the shortest distance between a terminal on the light-emitting side and a terminal on the light-receiving side along the package surface (L1 in FIG. 8). The spatial distance is the shortest distance between a terminal on the light-emitting side and a terminal on the light-receiving side in the space outside of the resin (L2 in FIG. 8).

A photocoupler can be used in the insulated communication line of a high-voltage (200-600 V) rechargeable battery system in which the battery packs are connected in series. However, there are limits to the insulation that can be provided by a photocoupler in order to comply with global safety standards when a rechargeable battery system with a voltage greater than 600 V is constructed using a greater number of series connections between battery packs.

When poor control is exercised during the charging of the battery packs, the battery packs may become overcharged or enter some other unsafe state. Therefore, other countermeasures are required to ensure safety.

In view of this situation, it is an object of the present invention to provide a communication system, and a rechargeable battery system provided with said communication system, which is able to effectively insulate a communication line between constituent devices and ensure safety when battery packs enter into an unsafe state in a high-voltage system constructed by connecting battery packs in series.

### Means of Solving the Problem

The communication system of the present invention is provided with a battery assembly obtained by connecting in series a plurality of battery packs having at least one rechargeable battery cell; a battery management unit for managing the battery packs; and an optical line used for transmitting from the battery packs to the battery management unit, along with battery data, an emergency stop signal for cutting off the connection between the battery assembly and a power conversion system when unsafe conditions are detected by the battery packs.

The rechargeable battery system of the present invention is provided with a communication system with the configuration described above; a power conversion system connected to a battery assembly belonging to the communication system; and a switching unit for switching between connecting and disconnecting the battery assembly and the power conversion system.

### Effect of the Invention

The present invention is able to effectively insulate a communication line between constituent devices and ensure safety when battery packs enter into an unsafe state in a high-voltage system constructed by connecting battery packs in series.

### BRIEF DESCRIPTION OF THE DRAWINGS

FIG. 1 is a diagram showing the overall configuration of a rechargeable battery system in an example of the present invention.
FIG. 2 is a diagram showing the configuration of a battery pack in an example of the present invention.
FIG. 3 is a diagram showing the configuration of a battery management unit (BMU) in an example of the present invention.
FIG. 4 is a diagram showing the configuration of a communication system in an example of the present invention.
FIG. 5 is a diagram showing the configuration with respect to communication between battery packs in an example of the present invention.
FIG. 6 is a diagram showing response data and emergency stop signals in an example of the present invention.
FIG. 7 is a diagram showing the configuration of a communication system in another example of the present invention.
FIG. 8 is a diagram showing a cross-sectional outline of an example of a photocoupler.

### DETAILED DESCRIPTION OF THE INVENTION

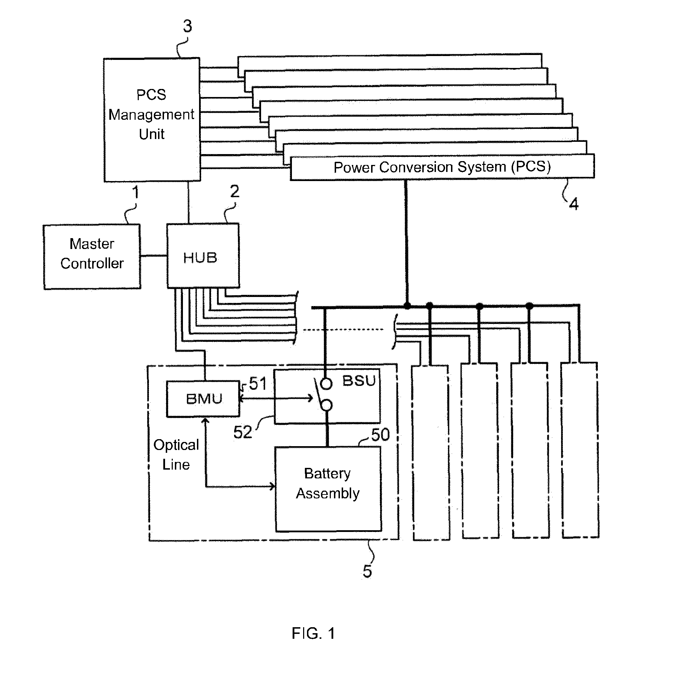

The following is an explanation of an embodiment of the present invention with reference to the drawings. FIG. 1 is a diagram showing the overall configuration of a rechargeable battery system in an example of the present invention. In FIG. 1, the thin solid lines represent signal lines, and the thick solid lines represent power lines. The rechargeable battery system in FIG. 1 has a master controller 1, a HUB 2, a power conversion system management unit 3, a power conversion system (PCS) 4, and a rechargeable battery unit 5.

The power conversion system management unit 3 receives charge/discharge control instructions from the master controller 1, and manages the operation of multiple power conversion systems (PCS) 4. A plurality of battery assemblies 50 is connected by a power line to each PCS 4. Each PCS 4 is a converter such as a two-way AC/DC converter or two-way DC/DC converter used to convert power between an external power supply (not shown) and the battery assemblies 50 or to convert power between the battery assemblies 50 and an external load (not shown). For example, when the external power supply is an external commercial power supply, each PCS 4 is a two-way AC/DC converter. When the external power supply is from solar cells, each PCS 4 is a two-way DC/DC converter.

The power conversion system management unit 3 controls the operation of each PCS 4 based on charge/discharge control instructions, and manages power in order to charge the battery assemblies 50 using power from an external power supply and to discharge the stored power to an external load.

A plurality of rechargeable battery units 5 are provided for each PCS 4. Each rechargeable battery unit 5 also has a battery assembly 50, battery management unit (BMU) 51, and battery switching unit (BSU) 52. A battery assembly 50 is a plurality of battery packs connected in series, in which the series connections create a high-voltage system with a voltage of 600 V or more. The BSU 52 (referred to as the switching unit in the present invention) is arranged between a PCS 4 and the battery assembly 50, and enters a connected state or open state under the control of the BMU 51.

The BMU 51 communicates with the battery assembly 50 via an optical line to request battery data from the battery assembly 50 and to acquire battery data from the battery assembly 50. When an irregularity is detected in a battery pack based on the acquired battery data, the BMU 51 opens the BSU 52 in order to disconnect the battery assembly 50 from the PCS 4. The BMU 51 includes a message indicating the irregularity along with the battery data that is sent to the master controller 1.

In the configuration shown in FIG. 1, a plurality of PCS 4 is controlled by one power conversion system management unit 3. However, when an irregularity occurs in a single power conversion system management unit 3, all of the PCS 4 may become uncontrollable. Therefore, a one power conversion system management unit 3 may be provided for each PCS 4.

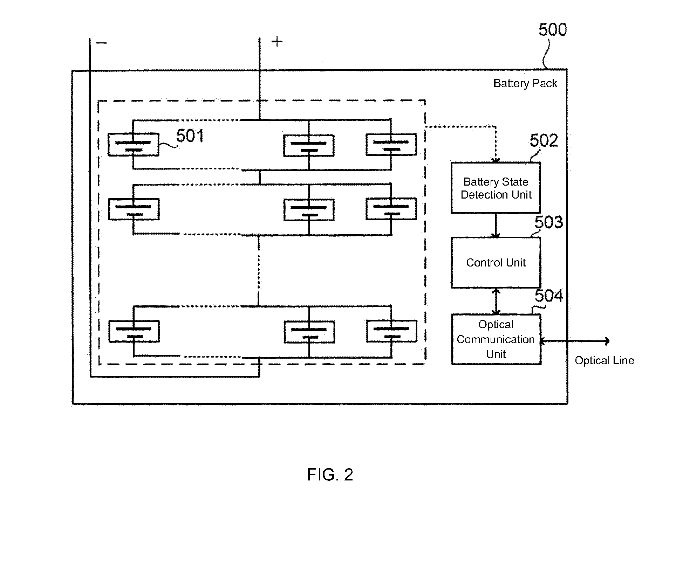

FIG. 2 is a diagram showing the configuration of a battery pack 500 constituting a battery assembly 50. The battery pack 500 has a plurality of rechargeable battery cells 501, a battery state detection unit 502, a control unit 503, and an optical communication unit 504. The rechargeable battery cells 501 can be lithium ion batteries, and are connected in series and in parallel. For example, 24 rechargeable battery cells 501 may be connected in parallel, and 13 rows of cells connected in parallel may be connected to each other in series. Each battery pack 500 may have a plurality of rechargeable battery cells 501 connected in parallel and treated as a single unit, or have only one rechargeable battery cell 501.

The battery state detection unit 502 detects the voltage level of each row of rechargeable battery cells 501 connected in parallel, the current value and voltage value between the positive and negative poles of the battery pack 500, the state of charge (SOC) of the battery pack 500 and the temperature of the battery pack 500, and outputs the detected data to the control unit 503. Here, the SOC is a parameter indicating the ratio of discharge capacity (remaining capacity) to full charge capacity, expressed as a percentage. The SOC can be determined from the cumulative value of the charge/discharge current flowing to and from the battery pack 500, and can be determined using an equation or table expressing the predetermined relationship between the open circuit voltage (OCV) and the SOC of the battery pack 500. The control unit 503 sends detection data acquired from the battery state detection unit 502 as battery data via the optical communication unit 504. The optical communication unit 504 includes a light-transmitting module and a light-receiving module.

When an optical communication unit 504 is used to provide insulation, the drive power of the optical communication unit 504 is supplied by the rechargeable battery cells 501 because the drive power for the communication unit cannot be provided by the BMU 51 as it is when communication is performed via metal.

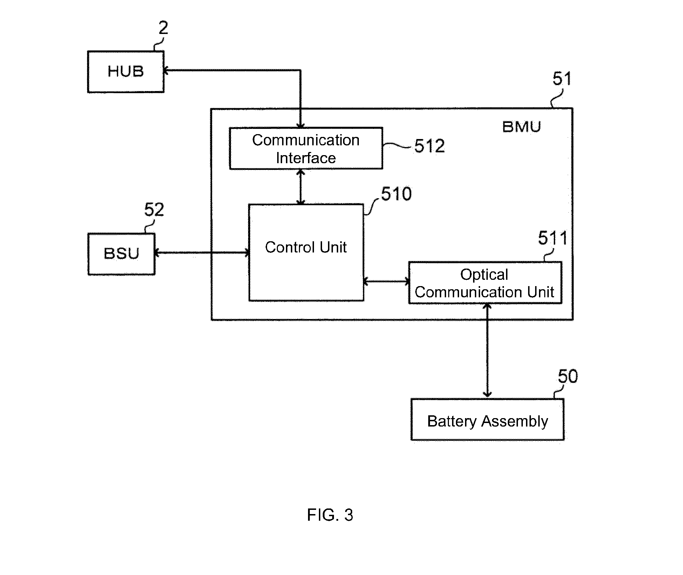

FIG. 3 shows an example of a configuration for the BMU 51. The BMU 51 is provided with a control unit 510, an optical communication unit 511, and a communication interface 512. The optical communication unit 511 includes a light-transmitting module and a light-receiving module. The control unit 510 sends battery data request commands to the battery assembly 50 and acquires battery data from the battery assembly 50 via the optical communication unit 511. The control unit 510 also controls the BSU 52 to obtain a connected state or open state, and communicates with the master controller 1 (FIG. 1) via the communication interface 512 and the HUB 2.

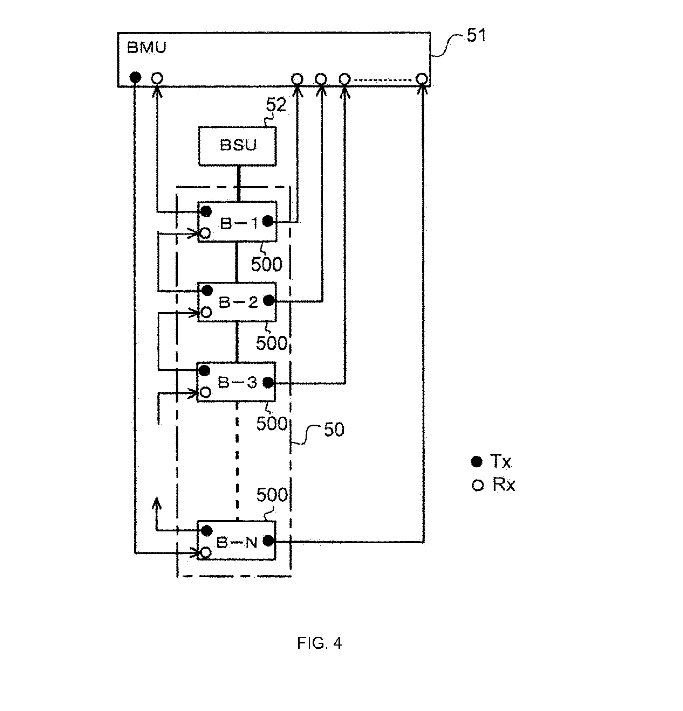

The following is an explanation of a communication system including battery packs 500 and BMU 51. FIG. 4 is a diagram showing the configuration of the communication system in an example of the present invention. In FIG. 4, N battery packs 500 (where N is a natural number equal to or greater than 2) are connected in series to create a battery assembly 50. (In FIG. 4, the nth battery pack 500 is referred to as "B - n," where n is a number between 1 and N, inclusive.) The first battery pack 500 is connected on the plus side of the BSU 52, the Nth battery pack 500 is connected to the minus side of the BSU 52, and the battery assembly 50 is connected via the BSU 52 to a PCS 4 (FIG. 1).

Each battery pack 500 has a light-transmitting module Tx and a light-receiving module Rx. The light-transmitting module Tx performs data transmission by lighting an LED. The light-transmitting module Tx and light-receiving module Rx in adjacent battery packs connected in series are connected by means of an optical fiber. The light-transmitting module Tx of the BMU 51 is connected to the light-receiving module Rx of the Nth battery pack 500 by means of an optic fiber, and the light-transmitting module Tx of the first battery pack 500 is connected to the light-receiving module Rx of the BMU 51 by means of an optic fiber. In this way, each battery pack 500 and BMU 51 are connected by optic fibers in a daisy chain. The optical lines connected in a daisy chain are used to transmit battery data requests.

Each light-transmitting module Tx of each battery pack 500 is connected one-on-one to each of N light-receiving modules Rx in the BMU 51 by means of optic fibers for battery data transmission.

In the communication method, the BMU 51 indicates a broadcast address and transmits a battery data request command from its own light-transmitting module Tx. The battery pack 500 receiving the battery data request command determines that the broadcast addresses is its own address, transmits battery data from its own light-transmitting module Tx to the BMU 51, and transfers the battery data request command to the adjacent battery pack 500. In this way, the Nth through the second battery packs 500 sequentially transmit battery data to the BMU 51. When the first battery pack 500 receives the transferred battery data request command, it transmits battery data to the BMU 51 from its own light-transmitting module Tx, and transfers the battery data request command to the BMU 51.

When it has received the battery data request command, the BMU 51 can determine whether there has been data corruption or a break in the optical lines by confirming receipt of the battery data request command. An optical line connecting the first battery pack 500 to the BMU 51 for the transfer of the battery data request command is not essential (that is, the daisy chain connection pattern does not have to include this optical line).

By connecting each battery pack 500 to a BMU 51 using optical lines, the communication lines between constituent devices can be effectively insulated and soundproofed even when battery packs 500 have been connected in series to create a system with a voltage equal to or greater than 600 V. The daisy chain connection pattern also prevents an increase in the number of communication ports in the BMU 51.

The broadcast of battery data request commands and the one-on-one connections for the transmission of battery data reduces the discrepancies of LED lighting times between battery packs 500, prevents a capacity imbalance between battery packs 500, and reduces the power consumed by lit LEDs. When a capacity imbalance occurs between battery packs, there is a combination of fully charged and empty battery packs in a row of battery packs connected in series. When the fully charged battery packs are charged, they become overcharged and cannot charge. When the empty battery packs are discharged, they become overdischarged and cannot discharge. In other words, the row reaches a state in which charging and discharging become impossible. For this reason, avoiding capacity imbalances between battery packs is critical.

In addition to battery data, the battery packs 500 also send emergency stop signals to the BMU 51 independently to ensure safety when they enter an unsafe state. This is explained below.

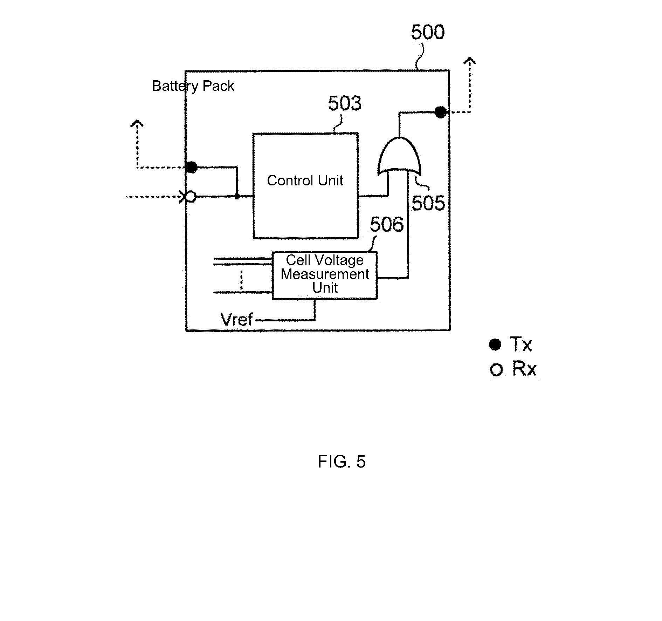

FIG. 5 is a diagram showing the configuration with respect to communication between battery packs 500 in an example of the present invention. As shown in FIG. 5, the battery pack 500 has a control unit 503, an OR circuit 505, a cell voltage measurement unit 506, a light-transmitting module Tx, and a light-receiving module Rx. The control unit 503 is connected to the light-transmitting modules Tx and light-receiving modules Rx, which are connected in a daisy chain. The control unit 503 is also connected to one input of the OR circuit 505. The output from the cell voltage measurement unit 506 is connected to the other input. The voltage level of each row of rechargeable battery cells 501 (FIG. 2) connected in parallel is inputted to the input of the cell voltage measurement unit 506, and an overcharge protection voltage Vref is inputted. The output of the OR circuit 505 is connected to the light-transmitting modules Tx connected one-on-one to the BMU 51.

When a battery data request command transmitted on a predetermined cycle (for example, a 1 sec cycle) is received, the control unit 503 sends response data including the battery data to the BMU 51 as optical signals via the OR circuit 505 and the light-transmitting module Tx.

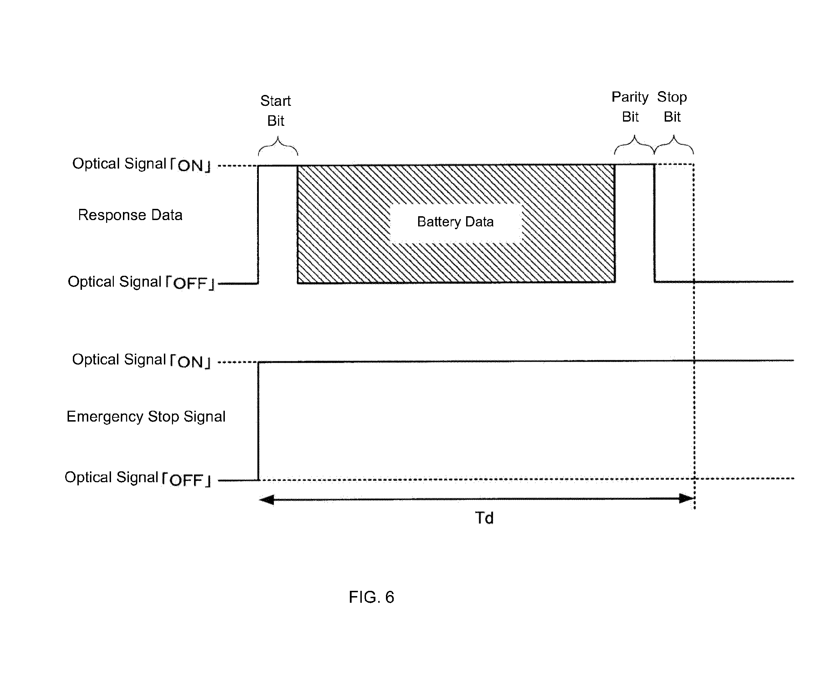

The battery data transmission method is an asynchronous system. In an asynchronous system in serial communication, information is added to the transmission of each character (8-bits) of data. This includes information at the beginning of the data indicating the start of data transmission (start bit), and information at the end of the data indicating the end of data transmission (stop bit). As shown at the top end of FIG. 6, the control unit 503 adds a start bit and a stop bit to the beginning and end of 8-bit battery data that includes a parity bit, and transmits this as response data. The start bit is an LED ON optical signal, and the stop bit is an LED OFF optical signal. When data is not being transmitted, the optical signal remains OFF.

When the maximum value among the voltage values inputted to the cell voltage measurement unit 506 from each row of rechargeable battery cells 501 (FIG. 2) connected in parallel exceeds the overcharge protection voltage Vref and the battery pack 500 has entered an unsafe state, the output from the cell voltage measurement unit 506 is activated. As a result, an emergency stop signal is sent from the light-transmitting module Tx to the BMU 51 as an ON optical signal as shown at the bottom of FIG. 6. By using a configuration (hardware configuration) which bypasses the control unit 503, the transmission of the emergency stop signal is more reliable.

The BMU 51 determines whether the period of time during which the optical signal is ON exceeds a predetermined period of time Td (FIG. 6) corresponding to 11 bits of data. In this way, it can determine whether an optical signal is an emergency stop signal or ordinary response data including battery data. (When the baud rate is 19200 bps, Td = 11 bits/19200 bps = 0.00057 sec.) Because the stop bit is an OFF optical signal, an optical signal remaining ON for at least a period of time corresponding to 11 bits of data can be recognized as an emergency stop signal.

When the BMU 51 has recognized a transmitted emergency stop signal, it switches the BSU 52 to an open state to disconnect the battery assembly 50 from the PCS 4. In this way, safety can be ensured even when a battery pack 500 has entered an unsafe state.

In this determination method, the transmission of an emergency stop signal may be falsely determined if all the battery data and the parity bit data are ON and the stop bit data becomes garbled from OFF to ON. However, the transmission of optical signals can be correctly identified as a stop bit signal or ordinary response data by determining whether the period of time during which the optical signal remains ON is two or three times longer than the fixed period Td.

The determination method described above may be used with other patterns in which any one of the bits in the transmitted battery data is defined as OFF.

Because the emergency stop signal is transmitted over the optical line used for transmitting battery data, the number of communication ports and lines can be reduced compared to a situation in which dedicated lines are used for emergency stop signals. When dedicated optical lines are used for emergency stop signals, multi-core optic fibers, for example, may be used. This increases costs.

Also, when dedicated optical lines are used for emergency stop signals, the lines are only used in an emergency situation. Therefore, it is impossible to determine whether the lines are functioning properly or improperly (e.g. disconnected). However, in the present invention, if the BMU 51 is unable to receive response data to battery data requests, a breach in communication can be detected, and it can be determined whether or not the lines used to transmit emergency stop signals are functioning properly. This is important because the failure to transmit and detect an emergency stop signal may place the system in extreme danger.

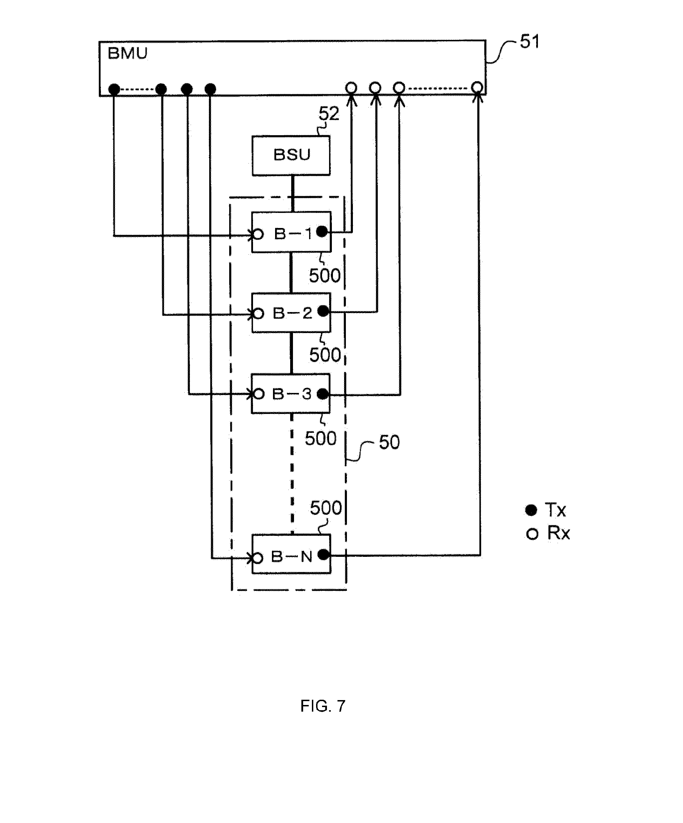

In the configuration shown in FIG. 4, a daisy chain connection was used to transmit battery data requests. However, in the configuration shown in FIG. 7, N light-transmitting modules Tx belonging to the BMU 51 and each light-receiving module Rx in each battery pack 500 are connected one-on-one by means of optic fibers to transmit battery data requests.

In this communication method, battery data request commands are transmitted sequentially to each battery pack 500 from the light-transmitting module Tx of the BMU 51. When a battery data request command is received, the battery pack 500 transmits battery data to the BMU 51 from its own light-transmitting module Tx. (In other words, the BMU 51 sequentially receives battery data from each battery pack 500.)

In another communication method, the BMU 51 sends battery data request commands to all of the battery packs 500 at the same time, and the BMU 51 receives battery data from all of the battery packs 500 in parallel.

In the present configuration, each battery pack 500 communicates directly with the BMU 51. This reduces the discrepancies of LED lighting times between battery packs 500, prevents a capacity imbalance between battery packs 500, and reduces power consumption because the battery packs 500 do not have to transfer the battery data request commands.

An embodiment of the present invention was described above, but many variations are possible within the spirit and scope of the present invention.

For example, when the daisy chain connection pattern in FIG. 4 is used, the light-transmitting module Tx of the BMU 51 may be connected to the light-receiving module Rx of the first battery pack 500, the battery packs 500 may be connected from the first battery pack 500 to the Nth battery pack 500 to transmit data, and the light-transmitting module Tx of the Nth battery pack 500 may be connected to the light-receiving module Rx of the BMU 51. Here, the connection from the Nth battery pack 500 to the BMU 51 is not required (that is, the daisy chain connection pattern does not have to include this connection).

### Key to the Drawings

1: Master Controller
2: HUB
3: Power Conversion System Management Unit
4: Power Conversion System (PCS)
5: Rechargeable battery Unit
50: Battery Assembly
51: Battery Management Unit (BMU)
52: Battery Switching Unit (BSU)
60: External Resin
61: Internal Resin
62: Solder Land
500: Battery Pack
501: Rechargeable battery Cell
502: Battery State Detection Unit
503: Control Unit
504: Optical Communication Unit
505: OR Circuit
506: Cell Voltage Measurement Unit
510: Control Unit
511: Optical Communication Unit
512: Communication Interface
Tx: Light-Transmitting Module
Rx: Light-Receiving Module

## Claims

1. A communication system provided with:
a battery assembly obtained by connecting in series a plurality of battery packs having at least one rechargeable battery cell;
a battery management unit for managing the battery packs; and
an optical line used for transmitting from the battery packs to the battery management unit, along with battery data, an emergency stop signal for cutting off the connection between the battery assembly and a power conversion system when unsafe conditions are detected by the battery packs.

2. The communication system according to claim 1, wherein the emergency stop signal is an optical signal which is ON.

3. The communication system according to claim 2, wherein the battery management unit determines whether an optical signal is an emergency stop signal or battery data on the basis of whether or not the period of time during which the signal is ON exceeds a predetermined period of time.

4. A rechargeable battery system provided with:
a communication system according to any one of claims 1 through 3;
a power conversion system connected to a battery assembly belonging to the communication system; and
a switching unit for switching between connecting and disconnecting the battery assembly and power conversion system.
